# EUROPÄISCHE PATENTSCHRIFT

(11) **EP 1 526 959 B1**
(45) Veröffentlichungstag und Bekanntmachung des Hinweises auf die Patenterteilung: **11.04.2007**
(21) Anmeldenummer: 03764914.2
(22) Anmeldetag: 14.05.2003
(51) Int. Cl.: B29C 47/42, B29B 7/48

(54) **EXTRUDER ZUM KONTINUIERLICHEN BEARBEITEN UND/ODER VERARBEITEN VON FLIESSFÄHIGEN MATERIALIEN**
EXTRUDER FOR THE CONTINUOUS HANDLING AND/OR PROCESSING OF FREE-FLOWING MATERIALS
EXTRUDEUSE DESTINEE AU TRAITEMENT CONTINU DE MATERIAUX COULANTS

(30) Priorität: 22.07.2002 DE 10233214
(43) Veröffentlichungstag der Anmeldung: 04.05.2005
(73) Patentinhaber: Blach Verwaltungs GmbH & Co. KG, 74348 Lauffen (DE)
(72) Erfinder: BLACH, Josef, A., 74348 Lauffen (DE)
(74) Vertreter: Berngruber, Otto
(86) Internationale Anmeldenummer: PCT/EP2003/005072
(87) Internationale Veröffentlichungsnummer: WO 2004/009327

(56) Entgegenhaltungen:
- WO-A-03/020493
- DE-A- 19 622 582
- GB-A- 1 468 482
- US-A- 3 746 319
- US-A- 4 192 617
- US-A- 6 062 719
- PATENT ABSTRACTS OF JAPAN vol. 014, no. 235 (M-0975), 18. Mai 1990 (1990-05-18) & JP 02 062222 A (MITSUBISHI HEAVY IND LTD), 2. März 1990 (1990-03-02)

## Beschreibung

Die Erfindung bezieht sich auf einen Extruder zum kontinuierlichen Bearbeiten und/oder Verarbeiten von fließfähigen Materialien nach dem Oberbegriff des Anspruchs 1.

Bei gleichsinnig drehenden Zweiwellenextrudern, die mit zweigängigen, ineinander greifenden Schnecken bestückt sind, wird der gesamte Materialstrom im Verfahrensraum, also dem Hohlraum im Extrudergehäuse, in drei parallele Stoffströme aufgeteilt, die sich entlang der Schnecken und der Innenwand des Extrudergehäuses erstrecken. Das Verhältnis von Gehäuseinnenumfang zur Verfahrensraumlänge ist etwa 1 : 1,5 bis 1 : 5. Demgegenüber ist bei einem Extruder gemäß dem Oberbegriff des Anspruchs 1 mit z.B. 12 längs eines Kreises angeordneten, also einen Kranz bildenden Wellen der Materialstrom auf 12 achsparallele Stoffströme verteilt, und das Verhältnis von Gehäuseinnenumfang zur Verfahrensraumlänge liegt zwischen 3:1 bis 1:1,5, d.h. ein derartiger Extruder zeichnet sich gegenüber einem Zweiwellenextruder durch einen wesentlich größeren Umfang, bezogen auf seine Länge, aus. Da viermal so viele Einzelströme gleicher Größe parallel nebeneinander im Verfahrensraum geführt werden müssen, sind bei einem Extruder der im Obergriff des Anspruchs 1 genannten Art sowohl die verfahrenstechnischen Gegebenheiten, als auch die Möglichkeiten, diese vorteilhaft zu nutzen, größer.

Bei Schnecken, die am ganzen Umfang dicht ineinander greifen, wird das Achsschnittprofil jedes Ganges durch drei Kreise bestimmt, die dem Schneckenaußendurchmesser, dem Schneckenkerndurchmesser und dem Achsabstand der Schnecken entsprechen (vgl. EP-B-0 002 131).

In einem Extruder gemäß dem Oberbegriff des Anspruchs 1 wird der gesamte Verfahrensraum im Extrudergehäuse in einen äußeren und einen inneren Verfahrensraum geteilt. Beide Räume sind nur durch einen dünnen, dynamischen Spalt getrennt, der zum Ausgleich der Fertigungstoleranzen erforderlich ist, damit die Schneckenwellen, ohne sich gegenseitig zu berühren, frei drehbar sind. Die dicht ineinandergreifenden Schnecken verhindern jedoch einen Materialdurchtritt von einem Verfahrensraum zum anderen, jedenfalls bei festen oder hochviskosen Materialien. Wenn solche Materialien zugeführt werden, wird daher über die Zuführöffnung nur der äußere Verfahrensraum gefüllt, während der innere Verfahrensraum im Bereich der Zuführöffnung ungenutzt bleibt. Durch diese Einzugsbegrenzung wird nur ein Bruchteil des möglichen Durchsatzes durch diesen Extruder realisiert.

Nach EP-B-0788 867 ist daher an der Zuführöffnung des Extruders in dem Wellenkranz wenigstens eine Öffnung vorgesehen, die beispielsweise durch Ersatz eines Schneckenelements durch eine zylindrische Hülse gebildet wird. Damit wird zwar der Materialaustausch zwischen dem äußeren und dem inneren Verfahrensraum verbessert, jedoch werden die fördernden Eigenschaften im Bereich der Zuführöffnung herabgesetzt.

Nach US-A-6 062 719 ist bei zwei ineinandergreifenden Schneckenelementen ein Abtrag am Schneckenkamm vorgesehen, um das zu bearbeitende Material von einem Kanal in einen anderen oder mehrere andere Kanäle zu fördern. Nach US-A-3 746 319 sind drei Schneckenwellen vorgesehen, die in einer einzigen Ebene liegen.

Aufgabe der Erfindung ist es, einen Extruder der im Oberbegriff des Anspruchs 1 genannten Art mit möglichst hohem Durchsatz bereitzustellen.

Dies wird erfindungsgemäß mit dem in Anspruch 1 gekennzeichneten Extruder erreicht. In den Unteransprüchen sind vorteilhafte Ausgestaltungen des erfindungsgemäßen Extruders wiedergegeben.

Um einen Durchlass von einem Verfahrensraum in den anderen zu ermöglichen, weist erfindungsgemäß wenigstens ein Schneckenelement Ausnehmungen im Schneckenkamm, Schneckenkern und/oder an der Schneckenflanke auf. Damit es durch dieses Durchlassschneckenelement zu einem Materialaustausch zwischen den beiden Verfahrensräumen kommt, ist zudem erfindungsgemäß ein Element vorgesehen, das den Produktfluss im Gang des Durchlassschneckenelements in Förderrichtung des Extruders hemmt. Dieses den Produktfluss im Gang des Durchlassschneckenelementes hemmende Element kann ein Element sein, dass in Förderrichtung dem Durchlassschneckenelement unmittelbar nachgeordnet ist. Es kann ein beliebiges Achsschnitt- oder Stirnprofil aufweisen, wobei die einzelnen Punkte des Profils von der Wellenachse einen Abstand zwischen dem Schneckenkerndurchmesser und dem Schneckenaußendurchmesser aufweisen können.

Beispielsweise kann das Stirnprofil dieses Elements dem Stirnprofil der Schneckenelemente entsprechen, also aus drei Kreisbögen bestehen, die dem Schneckenaußendurchmesser, dem Schneckenkerndurchmesser und dem Achsabstand der Schneckenelemente entsprechen, wie vorstehend beschrieben.

Insbesondere kann das den Produktfluss hemmende Element eine Scheibe sein. Der Außendurchmesser der Scheibe kann dabei dem Schneckenaußendurchmesser entsprechen, oder lediglich dem Schneckenkerndurchmesser , wodurch die Scheibe eher einem Ring entspricht. Als besonders geeignet hat sich eine Scheibe herausgestellt, deren Außendurchmesser dem Achsabstand zweier Wellen entspricht.

Das den Produktfluss hemmende Element kann beispielsweise auch ein Schneckenelement sein, das eine geringere fördernde Wirkung als die übrigen Schneckenelemente aufweist, beispielsweise durch eine geringere Gangsteigung.

Eine wesentliche Druckerhöhung an dem Durchlassschneckenelement wird zudem durch eine rückförderndes Schneckenelement erreicht, das mit dem Durchlassschneckenelement kämmen kann.

Das Durchlassschneckenelement und das produktflusshemmende Element können einstückig ausgebildet sein, beispielsweise durch einen Ring an dem Durchlassschneckenelement, der der erwähnten Scheibe mit Schneckenkerndurchmesser entspricht.

Das den axialen Fluss im Schneckenkanal bremsende Element führt also zu einem ortsfesten Produktrückstau und damit einem erhöhten Füllgrad an dem Durchlassschneckenelement, wodurch sich ein erhöhter Differenzdruck und eine erhöhte Verweildauer zum radialen Materialaustausch durch die Ausnehmung des Durchlassschneckenelements vom inneren zum äu-ßeren Verfahrensraum und umgekehrt ergibt.

Der Wellenkranz kann dabei mit gleichen oder unterschiedlichen produktflusshemmenden Elementen oder Durchlassschneckenelementen bestückt sein. Auch können mehrere gleiche oder unterschiedliche produktflusshemmende Elemente oder Durchlassschneckenelemente nacheinander angeordnet sein.

Durch Bestückung der Schneckenwellen mit unterschiedlichen Elementen in Umfangsrichtung von Welle zu Welle kann auch partiell ein Differenzdruck erzeugt und im kleinen Volumenbereich ein unterschiedlicher Füllgrad gezielt und fest eingestellt werden, und zwar sowohl in axialer wie in radialer Richtung.

Zumindest bei zweigängigen Schneckenelementen sollte die Länge des Durchlassschneckenelements wenigstens ein Viertel des Schneckenaußendurchmessers betragen, damit mit dem Element die gewünschte Wirkung erzielt wird. Wenn der Extruder nur eine Zuführöffnung aufweist, ist das Durchlassschneckenelement vorzugsweise im Bereich der Zuführöffnung vorgesehen. Insbesondere wenn das ihm nachgeordnete produktflusshemmende Element eine oder mehrere Scheiben mit einem den Schneckenaußendurchmesser entsprechenden Durchmesser aufweist, kann der innere Verfahrensraum an der Innenseite eine Erweiterung im Bereich der Scheibe besitzen, um einen Produktfluss im inneren Verfahrensraum in axialer Richtung sicherzustellen.

Nach dem produktflusshemmenden Element ist der Schneckenkanal weitgehend leer. Dem gemäß ist es vorteilhaft, vor einer Entgasungsöffnung des Extruders ein durchflusshemmendes Element anzuordnen, wodurch ein Materialaustritt durch die Entgasungsöffnung verhindert wird.

Wenn der Extruder mehrere Zuführöffnungen für unterschiedliche Materialien aufweist, ist es ferner vorteilhaft, ein produktflusshemmende Element nach dem Durchlassschneckenelement zwischen den Zuführöffnungen anzuordnen, wodurch das über die erste Zuführöffnung zugeführte Material in den inneren Verfahrensraum gelangt, der äußere Verfahrensraum hingegen für das über die nachfolgende Zuführöffnung zugeführte Material weitgehend leer gehalten wird.

Der erfindungsgemäße Extruder weist Wellen auf, die längs eines Kreises in dem Hohlraum des Extrudergehäuses angeordnet sind. Um einen Kreis zu bilden, sind im Allgemeinen mindestens sechs Wellen vorhanden.

Nachstehend ist der erfindungsgemäße Extruder anhand der Zeichnung beispielhaft näher erläutert. Darin zeigen:

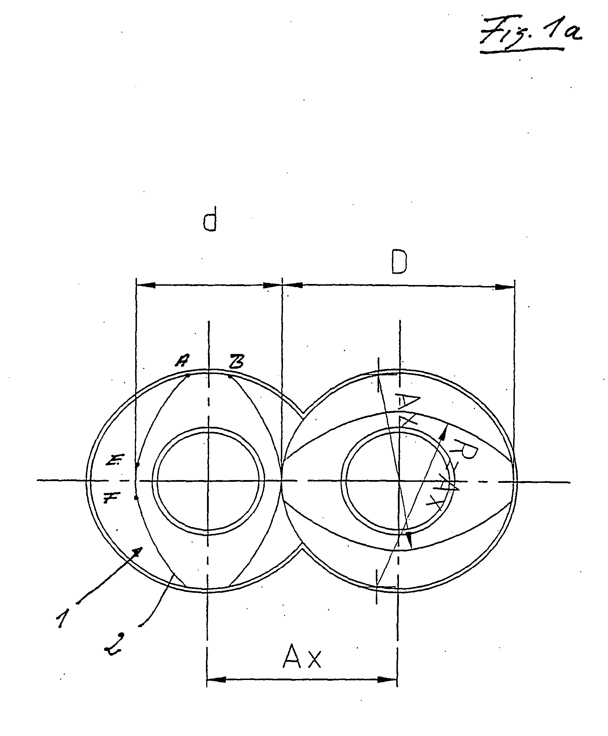

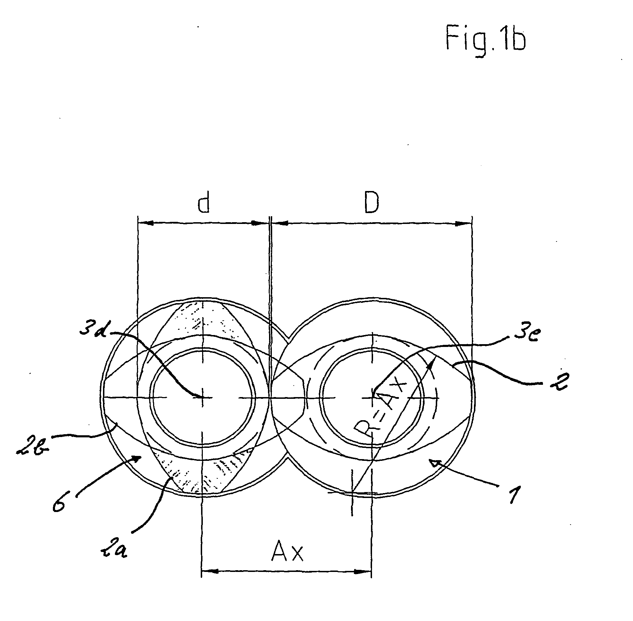

- Fig. 1 a: das Stirnprofil von zwei am ganzen Umfang dicht ineinandergreifenden Schneckenelementen;
- Fig. 1 b: das Stirnprofil von zwei dicht ineinandergreifenden Elementen, und zwar eines Schneckenelementes und eines durch Werkstoffabtrag am Schneckenkamm und der Schneckenflanke gebildeten Durchlassschneckenelements;
- Fig. 2: die Draufsicht auf vier nebeneinander angeordnete Wellen, die mit Schneckenelementen und einem Durchlassschneckenelement bestückt sind;
- Fig. 3: einen Längsschnitt durch eine erste Ausführungsform des Extruders;
- Fig. 4 und 5: einen Schnitt entlang der Linie IV-IV bzw. V-V in Figur 1;.
- Fig. 6: einen Längsschnitt durch eine zweite Ausführungsform des Extruders;
- Fig. 7 und Fig. 8: einen Schnitt entlang der Linie VII-VII bzw. VIII-VIII in Fig. 6
und
- Fig. 9: einen Querschnitt durch den Extruder mit einer Förderschnecke an der Zuführöffnung.

Gemäß Figur 1a weisen die Schneckenelemente 1 ein Stirnprofil 2 auf, das sich aus drei Kreisbögen A-B, E-F und A-E zusammensetzt. Der Kreisbogen A-B weist einen Durchmesser auf, der dem Schneckenaußendurchmesser D entspricht, der Kreisbogen E-F einen Durchmesser, der dem Schneckenkerndurchmesser d entspricht und der Kreisbogen A-E einen Durchmesser, dessen Radius dem Achsabstand Ax der beiden Schneckenelemente 1 entspricht.

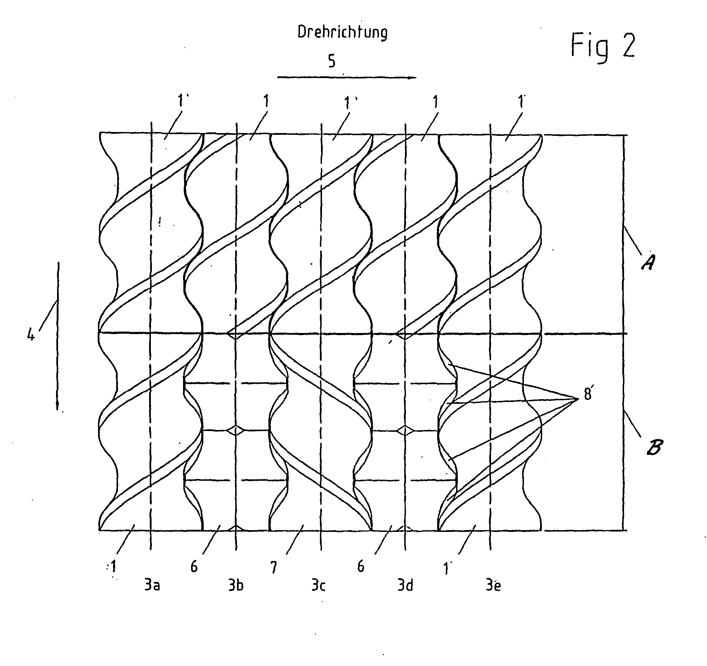

In Figur 1 b ist das Stirnprofil 2 eines Schneckenelementes 1 dargestellt, das in dichtem Eingriff mit dem Profil 2a eines Durchlassschneckenelementes 6 steht; das die beiden um 90° versetzten Schneckenprofile 2a und 2b aufweist, wie dies in Figur 2 nachstehend näher erläutert wird.

Danach sind in Figur 2 fünf gleichsinnig angetriebene Schneckenwellen 3a bis 3e dargestellt, und zwar zur besseren Veranschaulichung in einer Ebene. Die Förderrichtung des Extruders ist mit dem Pfeil 4 bezeichnet, und die Drehrichtung der Schneckenwellen 3a bis 3e mit dem Pfeil 5. Die Schneckenelemente 1 auf den Wellen 3a und 3e fördern also sowohl im Bereich A wie im Bereich B in Richtung 4, während auf den Wellen 3b, 3c und 3d nur im Bereich A fördernde Schneckenelemente 1 vorgesehen sind. Die Welle 3c ist im Bereich B mit einem produktflusshemmenden Element, nämlich einem rückfördernden Schneckenelement 7 bestückt. Die Wellen 3b und 3d sind im Bereich B mit je einem Durchlassschneckenelement 6 bestückt, die aus Schneckenelementen 1 gebildet sind, bei denen am Schneckenkamm und der Schneckenflanke ein Werkstoffabtrag 8 erfolgt ist, sodass gemäß Figur 2 in der Draufsicht rautenförmige Reste des Schneckenkamms zurückbleiben.

Die Schneckenelemente 1 im Abschnitt A greifen am ganzen Umfang dicht ineinander ein. Im Abschnitt B wird durch das rückfördernde Schneckenelement 7 ein ortsfester Produktrückstau gebildet und damit ein erhöhter Füllgrad im Bereich der Ausnehmungen 9 erzeugt, wodurch das Material durch die Ausnehmungen 9 radial hindurchgedrückt wird.

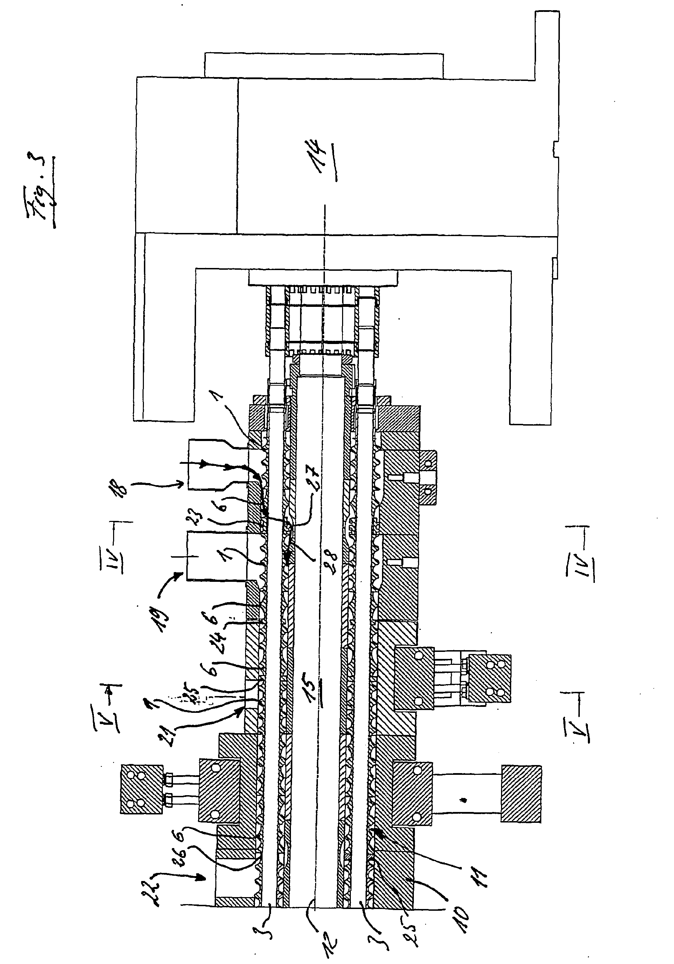

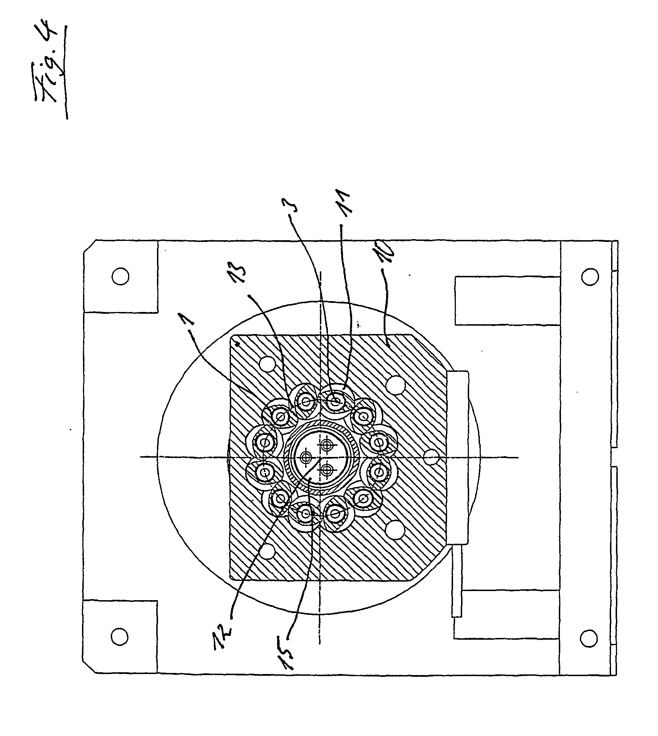

Gemäß Figur 3 bis 5 weist der Extruder in einem Gehäuse 10 einen Hohlraum 11 auf, in dem zwölf zur Extruderachse 12 parallele Wellen 3 längs eines Kreises 13 mit gleichem Zentriwinkel angeordnet sind, die durch eine Antriebseinheit 14 gleichsinnig angetrieben werden.

Die Wellen 3 sind mit Elementen bestückt, die teilweise aus über ihren ganzen Umfang dicht ineinander greifenden fördernden Schneckenelementen 1 bestehen, deren Stirnprofil in Figur 1 dargestellt ist.

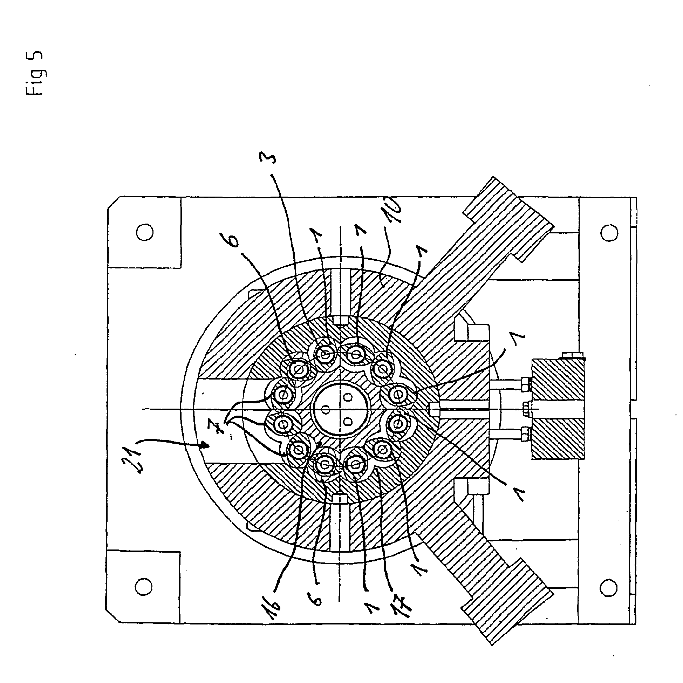

In dem Extrudergehäuse 10 ist ein axialer Innenkern 15 angeordnet. An der axial innenliegenden Seite, also am Innenkern 15 und an der axial außenliegenden Seite, also an der Innenseite des Gehäuses 10, sind konkave Kreissegmente 16, 17 (Fig. 5) vorgesehen, an denen die Schneckenelemente 1 dicht geführt sind.

An seinem der Antriebseinheit 14 zugewandten einen axialen Ende weist der Extruder 2 in den Hohlraum 11 führende Zuführöffnungen 18, 19 auf. Das Gehäuse 10 ist ferner mit zwei Entgasungsöffnungen 21, 22 versehen. An dem nicht dargestellten anderen axialen Ende des Extruders befindet sich die Austrittsöffnung für das verarbeitete Produkt.

Die in Figur 3 dargestellte obere, den Zuführöffnungen 18, 19 und den Entgasungsöffnungen 21, 22 benachbarte Welle 1 weist von dem Antriebselement 14 in Förderrichtung 4 nacheinander ein Schneckenelement 1 an der Zuführöffnung 18, ein entsprechendes Durchlassschneckenelement 6 gemäß Figur 2 mit unmittelbar dahinter angeordnetem produktflusshemmenden Element 23 in Form mehrerer Scheiben mit einem dem Schneckenaußendurchmesser entsprechenden Durchmesser, ein förderndes Schneckenelement 1 im Bereich der zweiten Zuführöffnung 19, nach der Zuführöffnung 19 ein Durchlassschneckenelement 6 mit einem unmittelbar dahinter angeordneten produktflusshemmenden Element in Form einer Scheibe 24 mit einem Durchmesser, der zwischen dem Schneckenaußendurchmesser und dem Schneckenkerndurchmesser liegt, ein Durchlassschneckenelement 6 gemäß Figur 2 mit dahinter angeordneter Scheibe 25 mit einem dem Schneckenaußendurchmesser entsprechenden Durchmesser vor der Entgasungsöffnung 21, ein förderndes Schneckenelement 1 im Bereich der Entgasungsöffnung 21 usw. auf, wobei noch das Figur 2 entsprechende Durchlassschneckenelement 6 mit dem unmittelbar dahinter angeordnetem Ring 26 als produktflusshemmendes Element vor der zweiten Entgasungsöffnung 22 zu erwähnen ist.

Die in Figur 3 auf der unteren Welle dargestellten Elemente entsprechen im wesentlichen denen auf der oberen Welle 1 dargestellten Elementen, abgesehen davon, dass anstelle des Rings 26 vor der zweiten Entgasungsöffnung eine Scheibe 25 mit einem dem Schneckenaußendurchmesser entsprechenden Durchmesser vorgesehen ist.

Aus Figur 3 ist ersichtlich, dass der Hohlraum 11 bzw. der Innenkern 15 im Bereich des produktflusshemmenden Elements 23, das aus mehreren Scheiben mit dem Schneckenaußendurchmesser entsprechendem Durchmesser besteht, eine Erweiterung bzw. Ausnehmung 27 aufweist. Das gemäß dem Pfeil 28 über die Zuführöffnung 18 zugeführte, am Durchlassschneckenelement 6 von dem äußeren Verfahrensraum in den inneren Verfahrensraum strömende Material wird damit an dem produktflusshemmenden Element 23 vorbei axial in dem inneren Verfahrensraum weitergeleitet.

Gemäß Figur 5 sind unmittelbar vor der Entgasungsöffnung 21 zwei Durchlassschneckenelemente 6 im Abstand angeordnet, und zwischen den Durchlassschneckenelementen 6 an der der Entgasungsöffnung 21 zugewandten oberen Seite drei rückfördernde Schneckenelemente 7 und an der von der Entgasungsöffnung 21 abgewandten unteren Seite zwischen den Durchlassschneckenelementen 6 sieben fördernde Schneckenelemente 1. Direkt unterhalb der Entgasungsöffnung sind dann im Kreis 13 Förderelemente vorgesehen.

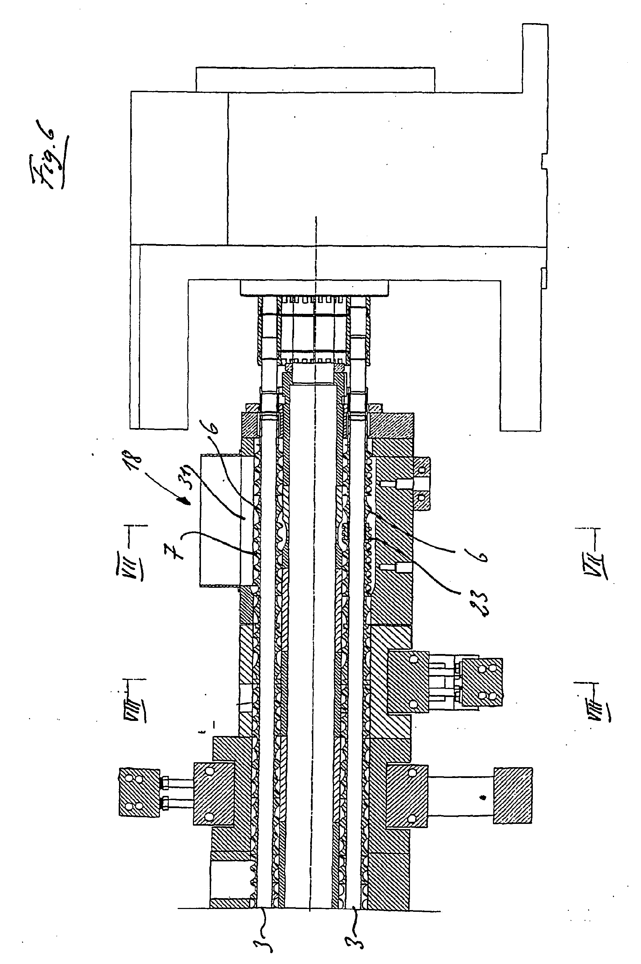

Die Ausführungsform nach Figur 6 bis 8 unterscheidet sich von der nach Figur 3 bis 5 dadurch, dass nur eine Zuführöffnung 18 vorgesehen ist. Im Bereich der Zuführöffnung 18 sind die obere und die untere Welle 1 mit einem Durchlassschneckenelement 6 bestückt, dem an der oberen Welle 1 ein rückförderndes Schneckenelement 7 und an der unteren Welle 1 ein produktflusshemmendes Element 23 aus mehreren Scheiben nachgeordnet ist.

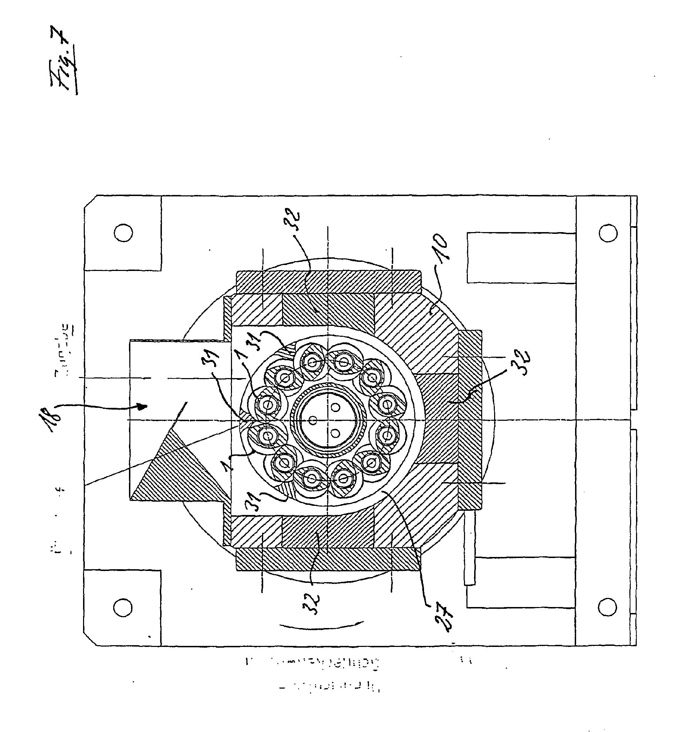

Gemäß Figur 6 und 7 weist der Hohlraum 11 im Bereich der Zuführöffnung 18 an seiner Außenseite eine Erweiterung auf, die durch eine entsprechende Ausnehmung 27 an der Innenwand des Gehäuses 10 gebildet ist, um einen um den Umfang des Wellenkranzes verteilten Materialeinzug zu erreichen.

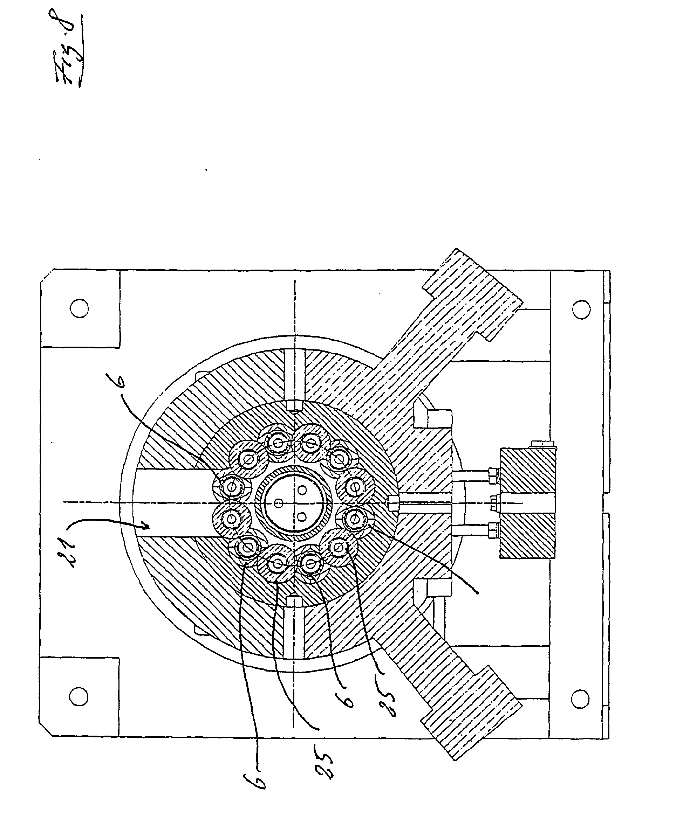

Um die Verteilung des einzuziehenden Materials zu verbessern, sind an der der Zuführöffnung 18 zugesandten Seite der Wellen 1 drei zur Extruderachse 12 parallele Längsrippen 31 vorgesehen, die auch zwischen den Schneckenelementen 1 zweier Wellen 3 eingreifen kann. Um die Kontur des Hohlraums 11 im Bereich der Erweiterung 27, also der Zuführöffnung 18 variieren zu können, sind Einbauten 32 im Extrudergehäuse 10 vorgesehen. Statt des dargestellten konkaven Profils, können die Einbauten 32 auch ein konvexes, gerades oder ein anderes Profil aufweisen. Die Einbauten 32 können auch zur Zufuhr, Reinigung und dgl. benutzt werden. An der Entgasungsöffnung 21 sind nach Figur 8 abwechselnd Durchlassschneckenelemente 6 vorgesehen und auf den Wellen 1 dazwischen jeweils nachgeordnet Scheiben 25 als produktflusshemmende Elemente.

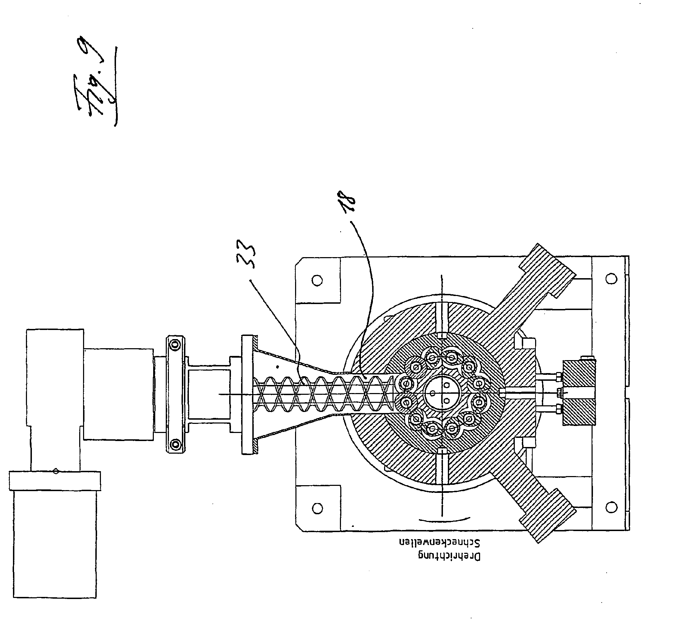

Um sowohl den äußeren wie den inneren Verfahrensraum voll zu nutzen, ist nach Figur 9 an der Zuführöffnung 8 eine Förderschnecke 33 vorgesehen, durch die das Material in den Verfahrensraum gedrückt wird. Am oberen Ende des Trichters sind nicht dargestellte Zufuhr- oder Absaugöffnungen vorgesehen. Die Schnecke 33 dient als Zufuhreinrichtung und, wenn kein Material zugeführt wird, als Rückhalteeinrichtung.

## Patentansprüche

1. Extruder zum kontinuierlichen Bearbeiten und/oder Verarbeiten von fließfähigen Materialien, mit in einem Hohlraum (11) eines Extrudergehäuses (10) längs eines Kreises (13) mit gleichem Zentriwinkelabstand angeordneten, zur Extruderachse (12) parallelen, gleichsinnig drehenden Wellen (3), die mit Elementen bestückt sind, die aus dicht ineinander greifenden Schneckenelementen (1) bestehen, deren Stirnfläche durch Kreisbögen (A-B, E-F, A-E) begrenzt wird, die dem Schneckenaußendurchmesser (D), dem Schneckenkerndurchmesser (d) und maximal dem Achsabstand (Ax) der Schneckenelemente (1) entsprechen, wobei das Extrudergehäuse (10) an der radial innen- und außenliegenden Seite des Hohlraumes (11) mit zur Extruderachse (12) parallelen konkaven Kreissegmenten (16, 17) versehen ist, an denen die Schneckenelemente (1) dicht geführt sind und der Extruder an seinem einen Ende wenigstens eine zu dem Hohlraum führende Zuführöffnung (18, 19) aufweist, **dadurch gekennzeichnet, dass** wenigstens ein Schneckenelement als Durchlassschneckenelement (6) durch Werkstoffabtrag (8) am Schneckenkamm, Schneckenkern und/oder an der Schneckenflanke ausgebildet ist, und ein den Produktfluss im Gang des Durchlassschneckenelementes (6) hemmendes Element vorgesehen ist.

2. Extruder nach Anspruch 1, **dadurch gekennzeichnet, dass** das den Produktfluss hemmende Element ein Stirnprofil aufweist, das zwischen dem Schneckenkerndurchmesser und dem Schneckenaußendurchmesser liegt.

3. Extruder nach Anspruch 2, **dadurch gekennzeichnet, dass** das Stirnprofil aus Kreisbögen besteht, die dem maximalen Schneckenaußendurchmesser, dem Schneckenkerndurchmesser und maximal dem Achsabstand der Schneckenelemente entsprechen.

4. Extruder nach einem der vorstehenden Ansprüche, **dadurch gekennzeichnet, dass** das produktflusshemmende Element durch wenigstens eine Scheibe (23, 24, 25, 26) gebildet wird.

5. Extruder nach Anspruch 4, **dadurch gekennzeichnet, dass** die Scheibe (23, 24, 25, 26) einen zwischen dem Schneckenkerndurchmesser und dem Schneckenaußendurchmesser liegenden Durchmesser aufweist.

6. Extruder nach Anspruch 4, **dadurch gekennzeichnet, dass** die Scheibe einen Außendurchmesser aufweist, der dem Achsabstand zweier Wellen (1) entspricht.

7. Extruder nach einem der Ansprüche 1 bis 3, **dadurch gekennzeichnet, dass** das produktflusshemmende Element ein langsamer förderndes Schneckenelement ist.

8. Extruder nach einem der Ansprüche 1 bis 3, **dadurch gekennzeichnet, dass** das produktflusshemmende Element ein rückförderndes Schneckenelement (7) ist.

9. Extruder nach einem der vorstehenden Ansprüche, **dadurch gekennzeichnet, dass** das Durchlassschneckenelement (6) und das produktflusshemmende Element einstückig ausgebildet sind oder separate Teile bilden.

10. Extruder nach Anspruch 1, **dadurch gekennzeichnet, dass** die Wellen (1) längs des Kreises (13), auf dem sie im Achsschnitt des Hohlraumes (11) angeordnet sind, mit gleichen oder unterschiedlichen Durchlassschneckenelementen (6) und/oder produktflusshemmenden Elementen bestückt sind.

11. Extruder nach einem der vorstehenden Ansprüche, **dadurch gekennzeichnet, dass** mehrere gleiche oder unterschiedliche produktflusshemmende Elemente und/oder Durchlassschneckenelemente (6) nacheinander angeordnet sind.

12. Extruder nach einem der vorstehenden Ansprüche, **dadurch gekennzeichnet, dass** wenigstens ein Durchlassschneckenelement (6) im Bereich der Zuführöffnung (18) vorgesehen ist.

13. Extruder nach einem der Ansprüche 1 bis 12, **dadurch gekennzeichnet, dass** mehrere Zuführöffnungen (18,19) vorgesehen sind und das wenigstens eine Durchlassschneckenelement (6) im Bereich zwischen zwei Zuführöffnungen (18, 19) vorgesehen ist.

14. Extruder nach Anspruch 12 oder 13, **dadurch gekennzeichnet, dass** der Hohlraum (11) im Bereich des durchflusshemmenden Elements an seiner Innenseite eine Erweiterung (27) aufweist.

15. Extruder nach einem der vorstehenden Ansprüche, **dadurch gekennzeichnet, dass** er wenigstens eine Entgasungsöffnung (21, 22) aufweist, der wenigstens ein produktflusshemmendes Element vorgeordnet ist.

16. Extruder nach einem der vorstehenden Ansprüche, **dadurch gekennzeichnet, dass** der Hohlraum (11) im Bereich der Zuführöffnung (18) an seiner Außenseite eine Erweiterung aufweist.

17. Extruder nach Anspruch 16, **dadurch gekennzeichnet, dass** an der der Zuführöffnung (18) zugewandten Seite der Wellen (1) wenigstens eine zur Extruderachse (12) parallele Längsrippe (31) vorgesehen ist.

18. Extruder nach Anspruch 16, **dadurch gekennzeichnet, dass** wenigsten ein Einbau (32) in das Extrudergehäuse (10) zur Änderung der Kontur des Hohlraums (11) im Bereich der Erweiterung vorgesehen ist.

19. Extruder nach einem der vorstehenden Ansprüche, **dadurch gekennzeichnet, dass** an der Zuführöffnung (18,19) eine Rückhaltevorrichtung vorgesehen ist, die das Material in den Hohlraum (11) drückt.

20. Extruder nach Anspruch 19, **dadurch gekennzeichnet, dass** die Rückhaltevorrichtung durch eine Förderschnecke (33) gebildet wird.

## Claims

1. An extruder for continuously working and/or processing flowable materials having corotating shafts (3) parallel to the extruder axis (12) and disposed in a cavity (11) of an extruder housing (10) along a circle (13) with the same central-angle distance which are equipped with elements consisting at least partly of closely intermeshing screw elements (1) whose end face is limited by circular arcs (A-B, E-F, A-E) corresponding to the outside screw diameter (D), the screw core diameter (d) and maximally the center distance (Ax) of the screw elements (1), the extruder housing (10) being provided on the radially inner and outer sides of the cavity (11) with concave circular segments (16, 17) parallel to the extruder axis (12), on which the screw elements (1) are tightly guided, and the extruder having at one end at least one supply port (18, 19) leading to the cavity, **characterized in that** at least one screw element is formed as a passage screw element (6) by stock removal (8) on the screw crest, screw core and/or screw flank, and an element is provided for inhibiting the product flow in the flight of the passage screw element (6).

2. An extruder according to claim 1, **characterized in that** the product flow inhibiting element has a transverse profile that is between the screw core diameter and the outside screw diameter.

3. An extruder according to claim 2, **characterized in that** the transverse profile consists of circular arcs corresponding to the maximum outside screw diameter, the screw core diameter and maximally the center distance of the screw elements.

4. An extruder according to any of the above claims, **characterized in that** the product flow inhibiting element is formed by at least one disk (23, 24, 25, 26).

5. An extruder according to claim 4, **characterized in that** the disk (23, 24, 25, 26) has a diameter that is between the screw core diameter and the outside screw diameter.

6. An extruder according to claim 4, **characterized in that** the disk has an outside diameter corresponding to the center distance of two shafts (1).

7. An extruder according to any of claims 1 to 3, **characterized in that** the product flow inhibiting element is a slow conveying screw element.

8. An extruder according to any of claims 1 to 3, **characterized in that** the product flow inhibiting element is a backfeed screw element (7).

9. An extruder according to any of the above claims, **characterized in that** the passage screw element (6) and the product flow inhibiting element are formed integrally or form separate parts.

10. An extruder according to claim 1, **characterized in that** the shafts (1) are equipped with identical or different passage screw elements (6) and/or product flow inhibiting elements along the circle (13) on which they are disposed in the axial section of the cavity (11).

11. An extruder according to any of the above claims, **characterized in that** a plurality of identical or different product flow inhibiting elements and/or passage screw elements (6) are disposed one after the other.

12. An extruder according to any of the above claims, **characterized in that** at least one passage screw element (6) is provided in the area of the supply port (18).

13. An extruder according to any of claims 1 to 12, **characterized in that** a plurality of supply ports (18, 19) are provided and at least one passage screw element (6) is provided in the area between two supply ports (18, 19).

14. An extruder according to claim 12 or 13, **characterized in that** the cavity (11) has an enlargement (27) on its inner side in the area of the flow inhibiting element.

15. An extruder according to any of the above claims, **characterized in that** it has at least one degassing opening (21, 22) with at least one product flow inhibiting element disposed upstream thereof.

16. An extruder according to any of the above claims, **characterized in that** the cavity (11) has an enlargement in the area of the supply port (18) on its outer side.

17. An extruder according to claim 16, **characterized in that** at least one longitudinal rib (31) parallel to the extruder axis (12) is provided on the side of the shafts (1) facing the supply port (18).

18. An extruder according to claim 16, **characterized in that** at least one fitting (32) in the extruder housing (10) is provided for changing the contour of the cavity (11) in the area of the enlargement.

19. An extruder according to any of the above claims, **characterized in that** a retaining apparatus urging the material into the cavity (11) is provided on the supply port (18, 19).

20. An extruder according to claim 19, **characterized in that** the retaining apparatus is formed by a conveying screw (33).

## Revendications

1. Extrudeuse pour usiner et/ou traiter en continu des matériaux coulants, comportant des arbres (3) tournant dans le même sens, parallèles à l'axe d'extrudeuse (12) et agencés dans une cavité (11) d'un boîtier d'extrudeuse (10) le long d'un cercle (13) avec la même distance angulaire au centre, arbres qui sont équipés d'éléments qui sont constitués par des éléments à vis sans fin (1) s'engrenant très près les uns des autres, dont la surface frontale est limitée par des arcs de cercle (A-B, E-F, A-E) qui correspondent au diamètre extérieur de vis sans fin (D), au diamètre de noyau de vis sans fin (d) et au maximum à la distance entre les axes (Ax) des éléments à vis sans fin (1), le boîtier d'extrudeuse (10) étant pourvu, sur le côté radialement intérieur et extérieur de la cavité (11), de segments de cercle (16, 17) concaves, parallèles à l'axe d'extrudeuse (12), sur lesquels les éléments à vis sans fin (1) sont guidés très près, et l'extrudeuse présente à une de ses extrémités au moins une ouverture d'amenée (18,19) menant à la cavité, **caractérisée en ce qu'**au moins un élément à vis sans fin est réalisé sous forme d'élément à vis sans fin de passage (6) par enlèvement de matière (8) sur la crête de vis sans fin, sur le noyau de vis sans fin et/ou sur le flanc de vis sans fin, et **en ce qu'**il est prévu un élément ralentissant le flux de produit dans la spire de l'élément à vis sans fin de passage (6).

2. Extrudeuse selon la revendication 1, **caractérisée en ce que** l'élément ralentissant le flux de produit présente un profil frontal qui est situé entre le diamètre de noyau de vis sans fin et le diamètre extérieur de vis sans fin.

3. Extrudeuse selon la revendication 2, **caractérisée en ce que** le profil frontal est constitué par des arcs de cercle qui correspondent au diamètre extérieur maximum de vis sans fin, au diamètre de noyau de vis sans fin et au maximum à la distance entre les axes de l'élément à vis sans fin.

4. Extrudeuse selon l'une des revendications précédentes, **caractérisée en ce que** l'élément ralentissant le flux de produit est formé au moins par une plaque (23, 24, 25, 26).

5. Extrudeuse selon la revendication 4, **caractérisée en ce que** la plaque (23, 24, 2.5, 26) présente un diamètre qui se situe entre le diamètre de noyau de vis sans fin et le diamètre extérieur de vis sans fin.

6. Extrudeuse selon la revendication 4, **caractérisée en ce que** la plaque présente un diamètre extérieur qui correspond à la distance entre les axes de deux arbres (1).

7. Extrudeuse selon l'une des revendications 1 à 3, **caractérisée en ce que** l'élément ralentissant le flux de produit est une vis sans fin à convoyage plus lent.

8. Extrudeuse selon l'une des revendications 1 à 3, **caractérisée en ce que** l'élément ralentissant le flux de produit est un élément à vis sans fin (7) refoulant.

9. Extrudeuse selon l'une des revendications précédentes, **caractérisée en ce que** l'élément à vis sans fin de passage (6) et l'élément ralentissant le flux de produit sont réalisés d'un seul tenant ou forment des pièces séparées.

10. Extrudeuse selon la revendication 1, **caractérisée en ce que** les arbres (1) sont équipés avec des éléments à vis sans fin de passage (6) similaires ou différents et/ou avec des éléments ralentissant le flux de produit similaires ou différents, le long du cercle (13) sur lequel les arbres sont agencés dans la section axiale de la cavité (11).

11. Extrudeuse selon l'une des revendications précédentes, **caractérisée en ce que** plusieurs éléments ralentissant le flux de produit similaires ou différents et/ou éléments à vis sans fin de passage (6) similaires ou différents sont agencés les uns derrière les autres.

12. Extrudeuse selon l'une des revendications précédentes, **caractérisée en ce qu'**il est prévu au moins un élément à vis sans fin de passage (6) dans la région de l'ouverture d'amenée (18).

13. Extrudeuse selon l'une des revendications 1 à 12, **caractérisée en ce qu'**il est prévu plusieurs ouvertures d'amenée (18, 19) et **en ce qu'**au moins un élément à vis sans fin de passage (6) est prévu dans la région entre deux ouvertures d'amenée (18, 19).

14. Extrudeuse selon la revendication 12 ou 13, **caractérisée en ce que** la cavité (11) présente un évasement (27) sur sa face intérieure, dans la région de l'élément ralentissant le flux de produit.

15. Extrudeuse selon l'une des revendications précédentes, **caractérisée en ce qu'**elle présente au moins une ouverture de dégazage (21, 22) en amont de laquelle est agencé au moins un élément ralentissant le flux de produit.

16. Extrudeuse selon l'une des revendications précédentes, **caractérisée en ce que** la cavité (11) présente un évasement (27) sur sa face extérieure, dans la région de l'ouverture d'amenée (18).

17. Extrudeuse selon la revendication 16, **caractérisée en ce que** sur le côté des arbres (1) qui est tourné vers l'ouverture d'amenée (18) est prévue au moins une nervure longitudinale (31) parallèle à l'axe d'extrudeuse (12).

18. Extrudeuse selon la revendication 16, **caractérisée en ce qu'**il est prévu au moins un encastrement (32) dans le boîtier d'extrudeuse (10) pour modifier le contour de la cavité (11) dans la région de l'évasement (27).

19. Extrudeuse selon l'une des revendications précédentes, **caractérisée en ce qu'**il est prévu sur l'ouverture d'amenée (18, 19) un dispositif de retenue qui presse la matière dans la cavité (11).

20. Extrudeuse selon la revendication 19, **caractérisée en ce que** le dispositif de retenue est formé par une vis sans fin transporteuse (33).
